# EUROPÄISCHE PATENTSCHRIFT

(11) **EP 1 454 774 B1**
(45) Veröffentlichungstag und Bekanntmachung des Hinweises auf die Patenterteilung: **17.05.2006**
(21) Anmeldenummer: 04004797.9
(22) Anmeldetag: 02.03.2004
(51) Int. Cl.: B60G 9/00, B60G 11/22

(54) **Vorrichtung zur Anbindung einer Hinterachse an den Fahrzeugaufbau eines Kraftfahrzeugs**
Device for connecting a rear axle to the vehicle structure
Dispositif de couplage d'un essieu arrière à la structure d'un véhicule

(30) Priorität: 03.03.2003 DE 10309996
(43) Veröffentlichungstag der Anmeldung: 08.09.2004
(73) Patentinhaber: NEOPLAN Bus GmbH, 70567 Stuttgart (DE)
(72) Erfinder: Marquardt, Heiko, 70567 Stuttgart (DE); Wagner, Bernd, 70569 Stuttgart (DE); Weisgerber, Christian, 70567 Stuttgart (DE); Darscheid, Manfred, 70567 Stuttgart (DE)

(56) Entgegenhaltungen:
- DE-C- 652 179
- DE-U- 1 980 532
- FR-A- 1 237 843
- GB-A- 2 345 476
- US-A- 3 744 813
- PATENT ABSTRACTS OF JAPAN Bd. 0161, Nr. 22 (M-1226), 27. März 1992 (1992-03-27) & JP 03 287407 A (JIDOSHA BUHIN KOGYO KK), 18. Dezember 1991 (1991-12-18)
- PATENT ABSTRACTS OF JAPAN Bd. 0132, Nr. 67 (M-840), 20. Juni 1989 (1989-06-20) & JP 01 067481 A (KOMATSU LTD), 14. März 1989 (1989-03-14)

## Beschreibung

Die Erfindung betrifft eine Vorrichtung zur Anbindung einer Hinterachse an den Fahrzeugaufbau eines Kraftfahrzeuges, insbesondere eines Omnibusses, mit einem die Hinterachse tragenden starren Achsträger, der über zwei bezogen auf die Fahrtrichtung auf einer Seite der Hinterachse angeordnete erste Lagerelemente und ein quer zur Fahrtrichtung mittig auf der anderen Seite der Hinterachse angeordnetes zweites Lagerelement mit dem Fahrzeugaufbau verbindbar ist.

Starre Achsträger, mit denen eine Hinterachse eines Kraftfahrzeuges, vor allem eines Nutzfahrzeuges, beispielsweise eines Omnibusses, an den Fahrzeugaufbau angebunden werden kann, werden häufig auch als Fahrschemel bezeichnet. Sie bilden einen starren Rahmen, an dem eine Hinterachse des Kraftfahrzeuges festlegbar ist und der mittels mehrerer Lagerelemente am Fahrzeugaufbau, beispielsweise an der Fußbodenstruktur eines Omnibusses, gelagert werden kann. In vielen Fällen kommen vier Lagerelemente zum Einsatz, wobei zwei Lagerelemente in einem Bereich hinter der anzubindenden Hinterachse und zwei weitere Lagerelemente im Bereich vor der Hinterachse angeordnet sind. Dies ermöglicht eine 4-Punkt-Lagerung oder -Aufhängung der Hinterachse am Fahrzeugaufbau, die sich in vielen Fällen bewährt hat, die allerdings einen erheblichen Bauraum erfordert. Insbesondere für Niederflurbusse kommen zur Einsparung von Bauraum in vielen Fällen Konstruktionen zum Einsatz, bei denen hinter der Hinterachse zwei gefederte erste Lagerelemente, beispielsweise zwei Luftfedern, am Achsträger angeordnet sind, während vor der Hinterachse lediglich ein einziges, quer zur Fahrtrichtung mittig angeordnetes zweites Lagerelement vorgesehen ist, das mit dem Fahrzeugaufbau zusammenwirkt. Das zweite Lagerelement nimmt sowohl horizontal ausgerichtete als auch vertikal ausgerichtete Kräfte auf, die zwischen dem Achsträger und dem Fahrzeugaufbau auftreten. Üblicherweise ist das zweite Lagerlement kardanisch verformbar, um die erforderliche Beweglichkeit des starren Achsträgers relativ zum Fahrzeugaufbau sicherzustellen. Die kardanische Verformbarkeit hat allerdings den Nachteil, daß eine Wippbewegung des Achsträgers, wie sie insbesondere bei einer Fahrt auf unebener Fahrbahn auftreten kann, dazu führen kann, daß im Bereich des zweiten Lagerelements Vertikalkräfte fast ungefedert auf den Fahrzeugaufbau übertragen werden, so daß der Fahrzeugaufbau einer Stoßbelastung unterliegt.

Aufgabe der vorliegenden Erfindung ist es, eine Vorrichtung der eingangs genannten Art derart weiterzubilden, daß eine Stoßbelastung des Fahrzeugaufbaus bei einer Wippbewegung des Achsträgers vermieden wird.

Diese Aufgabe wird bei einer Vorrichtung der gattungsgemäßen Art erfindungsgemäß dadurch gelöst, daß das zweite Lagerelement ein Federglied sowie eine Führungsanordnung aufweist, die jeweils mit dem Fahrzeugaufbau zusammenwirken, wobei das Federglied in vertikaler Richtung ausgerichtete Kräfte zwischen dem Achsträger und dem Fahrzeugaufbau abfedert und wobei mittels der Führungsanordnung in horizontaler Richtung ausgerichtete Kräfte zwischen dem Achsträger und dem Fahrzeugaufbau übertragbar sind.

Die erfindungsgemäße Ausgestaltung ermöglicht mittels des Federglieds eine in vertikaler Richtung wirkende federnde Lagerung des Achsträgers im Bereich des zweiten Lagerelementes, so daß bei einer Wippbewegung vom Achsträger praktisch keine Stöße in vertikaler Richtung auf den Fahrzeugaufbau ausgeübt werden können. Andererseits wird jedoch durch den Einsatz der Führungsanordnung sichergestellt, daß horizontal ausgerichtete Kräfte, wie sie insbesondere beim Anfahren, beim Abbremsen sowie bei Kurvenfahrten auftreten, zuverlässig vom Achsträger auf den Fahrzeugaufbau übertragbar sind. Die Anordnung der Lagerelemente kann derart sein, daß die beiden ersten Lagerelemente bezogen auf die Fahrtrichtung des Kraftfahrzeugs hinter der Hinterachse und das zweite Lagerelement quer zur Fahrtrichtung mittig vor der Hinterachse angeordnet sind. Alternativ kann auch eine umgekehrte Anordnung zum Einsatz kommen dergestalt, daß die beiden ersten Lagerelemente vor der Hinterachse und das zweite Lagerelement quer zur Fahrtrichtung mittig hinter der Hinterachse positioniert ist. Die erfindungsgemäße Konstruktion stellt also eine gefederte 3-Punkt-Lagerung des Achsträgers am Fahrzeugaufbau bereit, die sicherstellt, daß Achsträger und Fahrzeugaufbau bezüglich einwirkender vertikaler Kräfte entkoppelt sind, während in horizontaler Richtung eine zuverlässige Führung sichergestellt ist. Die 3-Punkt-Lagerung des Achsträgers erfordert nur einen verhältnismäßig geringen Bauraum. Die erfindungsgemäße Konstruktion eignet sich deshalb in besonderer Weise für den Einsatz in Doppeldeckerbussen, sie kann jedoch auch bei Eindeckerbussen, insbesondere bei Niederflurbussen, zum Einsatz kommen, wobei die Vorrichtung auch gesteigerten Komfortansprüchen der Fahrgäste gerecht wird.

Bei einer kostengünstig herstellbaren Ausführungsform ist vorgesehen, daß die Führungsanordnung miteinander zusammenwirkende erste und zweite Führungselemente umfaßt, die mit dem Fahrzeugaufbau bzw. mit dem Achsträger verbindbar und in vertikaler Richtung relativ zueinander verschiebbar sind, wobei über die Führungselemente horizontal ausgerichtete Kräfte zwischen dem Achsträger und dem Fahrzeugaufbau übertragbar sind. Vorzugsweise sind die Führungselemente lösbar verbindbar am Achsträger bzw. am Fahrzeugaufbau gehalten. Dies ermöglicht eine kostengünstige Montage der Führungsanordnung.

Günstig ist es, wenn das Federglied des zweiten Lagerelementes als Luftfeder ausgestaltet ist.

Es kann vorgesehen sein, daß das Federglied in vertikaler Richtung verstellbar ist. Dies ermöglicht es, den Fahrzeugaufbau in Richtung auf den Achsträger abzusenken. Hierzu kann einem als Luftfeder ausgebildeten Federglied ein Luftfederventil zugeordnet sein zur wahlweisen Zufuhr oder Abfuhr von Druckluft.

Bei einer besonders bevorzugten Ausgestaltung der erfindungsgemäßen Vorrichtung sind die beiden ersten Lagerelemente jeweils als Luftfedern ausgestaltet. Ergänzend kann auch das Federglied des zweiten Lagerelementes in Form einer Luftfeder ausgebildet sein, so daß die gesamte federnde Lagerung des Achsträger am Fahrzeugaufbau mittels dreier Luftfedern erfolgt.

Die Führungsanordnung weist bei einer vorteilhaften Ausführungsform einen Führungszapfen auf, der in vertikaler Richtung verschiebbar in einer Führungsbuchse gelagert ist. Die Führungsbuchse ist hierbei vorzugsweise als Gleitbuchse ausgebildet. Dadurch können Reibungskräfte bei einer Verschiebung des Führungszapfens relativ zur Führungsbuchse gering gehalten werden, so daß die Führungsbuchse bei einer Bewegung in vertikaler Richtung vom Führungszapfen praktisch entkoppelt ist und folglich zwischen den beiden Bauteilen in vertikaler Richtung keine Kräfte übertragen werden können. In horizontaler Richtung kann jedoch über den in die Führungsbuchse eintauchenden Führungszapfen eine zuverlässige Kraftübertragung zwischen den beiden Bauteilen erfolgen.

Als günstig hat es sich erwiesen, wenn der Führungszapfen mit dem Fahrzeugaufbau, beispielweise einer Fahrzeugbodenstruktur, starr verbindbar ist. Hierzu kommt bei einer bevorzugten Ausführungsform ein Schraubverbindung zum Einsatz.

Der Führungszapfen kann beispielsweise T- oder pilzförmig ausgestaltet sein in Form eines in die Führungsbuchse eintauchenden Führungsbolzens, der an seinem dem Fahrzeugaufbau zugewandten Ende einen vorzugsweise einstückig mit dem Führungsbolzen verbundenen Verbindungsflansch trägt. Der Verbindungsflansch ermöglicht eine großflächige Anlage des Führungszapfens am Fahrzeugaufbau, vorzugsweise an dessen Fußbodenstruktur.

Bei einer vorteilhaften Ausführungsform der erfindungsgemäßen Vorrichtung weist das zweite Lagerelement eine starr mit dem Achsträger verbundene Lagerhülse auf, in der die Führungsbuchse federnd gelagert ist. Dies ermöglicht es, horizontal ausgerichtete Kräfte, die zwischen dem Achsträger und dem Fahrzeugaufbau auftreten, abzufedern.

Von Vorteil ist es, wenn die Lagerhülse die Führungsbuchse in Umfangsrichtung umgibt, wobei zwischen der Führungsbuchse und der Lagerhülse ein federnder Lagerring angeordnet ist. Der Lagerring kann einen Ringraum zwischen der Führungsbuchse und der Lagerhülse ausfüllen. Günstig ist es, wenn die Führungsbuchse in den Lagerring einpreßbar ist.

Der Lagerring ist vorzugsweise unter Einsatz eines Elastomers gefertigt, wobei es günstig ist, wenn der Lagerring eine Verstärkung, vorzugsweise eine Metallverstärkung, aufweist.

Wie bereits erläutert, kann mittels des Federglieds das zweite Lagerelement in vertikaler Richtung am Fahrzeugaufbau abgestützt werden. Um bei einer Fehlfunktion des Federglieds eine Beschädigung des zweiten Lagerelements, insbesondere der Führungsanordnung, zu vermeiden, ist es günstig, wenn in vertikaler Richtung zwischen dem ersten und dem zweiten Führungselement der Führungsanordnung ein Puffer angeordnet ist, der zur Vermeidung einer Beschädigung einen Mindestabstand zwischen den beiden Führungselementen sicherstellt.

So kann beispielsweise vorgesehen sein, daß der Puffer als an dem dem Fahrzeugaufbau zugewandten Ende der Führungsbuchse angeordnetes, in Richtung auf den Fahrzeugaufbau über die Führungsbuchse überstehendes Auflageelement ausgebildet ist.

Vorzugsweise ist der Puffer unter Einsatz eines verformbaren Materials gefertigt, insbesondere unter Einsatz eines Elastomers.

Von besonderem Vorteil ist es, wenn der Puffer als einstückig mit dem Lagerring verbundener Ringwulst ausgestaltet ist, der den Führungszapfen in radialem Abstand in Umfangsrichtung umgibt.

Bei einer bevorzugten Ausführungsform der erfindungsgemäßen Vorrichtung weist der Achsträger zwei Längsträger auf, die jeweils L-förmig ausgestaltet sind und einen ersten, im wesentlichen horizontal ausgerichteten Schenkel sowie einen zweiten, schräg oder senkrecht zur Horizontalen ausgerichteten Schenkel aufweisen, wobei die ersten Lagerelemente den freien Enden der zweiten Schenkel benachbart angeordnet sind und wobei das zweite Lagerelement den freien Enden der ersten Schenkel benachbart angeordnet ist. Die in vertikaler Richtung federnd ausgestalteten ersten und zweiten Lagerelemente sind somit im Bereich der freien Enden der beiden L-förmigen Längsträger positioniert. Dies ermöglicht es, die ersten Lagerelemente in einer Ebene oberhalb des zweiten Lagerelementes und vorzugsweise auch oberhalb der an der Hinterachse gelagerten Hinterräder anzuordnen. Dadurch kann eine besonders gute Seitenstabilität des Kraftfahrzeuges erreicht werden.

Günstig ist es, wenn die ersten Lagerelemente an einem die freien Enden der zweiten Schenkel der Längsträger starr miteinander verbindenden oberen Querträger angeordnet sind. Der obere Querträger stellt eine starre Verbindung der beiden Längsträger dar. Mit seinen freien Endbereichen kann der obere Querträger seitlich über die Längsträger überstehen und in diesen überstehenden Bereichen jeweils eine beispielsweise tellerförmige Aufnahme ausbilden, an der jeweils ein erstes Lagerelement, vorzugsweise in Form einer Luftfeder, gehalten ist.

Bevorzugt ist am oberen Querträger ein Querlenker angelenkt zur Verbindung des Querträgers mit dem Fahrzeugaufbau. Derartige Querlenker werden auch als Panhard-Stäbe bezeichnet. Da der Panhard-Stab in anderer Höhe angeordnet ist als das zweite Lagerelement, hat dies zur Folge, daß die Wankachse des Kraftfahrzeuges schräg zur Fahrbahn ausgerichtet ist. Dies hat eine deutlich verbesserte Wanksteifheit zur Folge. In Kombination mit der Vorderachse des Kraftfahrzeuges und mit gegebenenfalls zum Einsatz kommenden Nachlaufachsen führt dies zu mehreren, zueinander gewinkelten Rollachsen, die schräg zur Fahrbahn ausgerichtet sind. Dadurch kann eine sehr gute Fahrstabilität erzielt werden.

Eine besonders hohe Steifigkeit des Achsträgers kann dadurch erzielt werden, daß die beiden Längsträger über einen unteren Querträger starr miteinander verbunden sind. Vorzugsweise ist der untere Querträger parallel zum oberen Querträger ausgerichtet. Günstig ist es, wenn der untere Querträger die beiden L-förmigen Längsträger in ihrem gekrümmten Bereich miteinander verbindet.

Es kann vorgesehen sein, daß die beiden Längsträger V-förmig zueinander ausgerichtet und mit den freien Enden ihrer ersten Schenkel über das zweite Lagerelement starr miteinander verbunden sind. Eine derartige Ausgestaltung der erfindungsgemäßen Vorrichtung eignet sich insbesondere für den Einsatz in Eindeckerbussen, vorzugsweise für Niederflurbusse.

Alternativ kann vorgesehen sein, daß die freien Enden der ersten Schenkel der beiden Längsträger über ein Querjoch starr miteinander verbunden sind, wobei das zweite Lagerelement am Querjoch angeordnet ist. Das Querjoch ist vorzugsweise ebenso wie die Längsschenkel als Hohlprofil ausgestaltet und kann in Kombination mit dem zweiten Lagerelement ein Fahrwerkmodul ausbilden, das eine kostengünstige Montage der erfindungsgemäßen Vorrichtung ermöglicht.

Bei Einsatz eines Querjochs hat es sich als günstig erwiesen, wenn die beiden Längsträger im wesentlichen parallel zueinander ausgerichtet sind. Eine derartige Konstruktion hat sich insbesondere für den Einsatz der erfindungsgemäßen Vorrichtung bei Doppeldeckerbussen bewährt.

Die nachfolgende Beschreibung einer bevorzugten Ausführungsform dient im Zusammenhang mit der Zeichnung der näheren Erläuterung. Es zeigen:
- Figur 1:: eine schaubildliche Darstellung einer erfindungsgemäßen Vorrichtung zur Anbindung einer Hinterachse an den Fahrzeugaufbau eines Kraftfahrzeuges; und
- Figur 2:: eine Schnittansicht längs der Linie 2-2 in Figur 1.

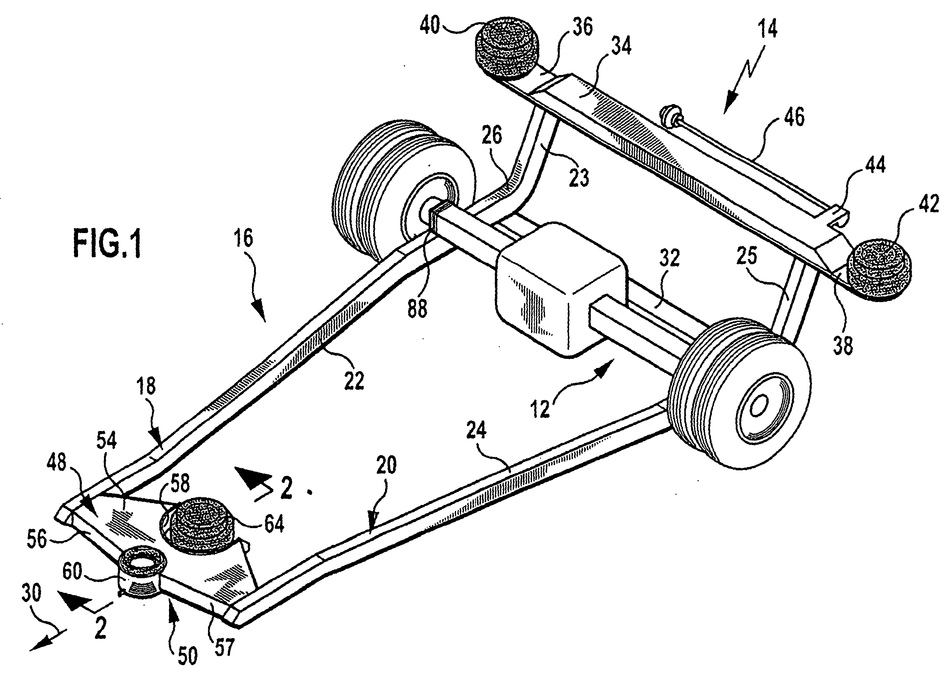

Figur 1 zeigt schematisch eine bevorzugte Ausführungsform der erfindungsgemäßen Vorrichtung zur Anbindung einer Hinterachse 12 an einen in der Zeichnung nicht dargestellten, an sich bekannten Fahrzeugaufbau eines Kraftfahrzeuges, insbesondere eines Omnibusses. Die Vorrichtung ist insgesamt mit dem Bezugszeichen 14 belegt. Sie umfaßt einen Achsträger 16, der im folgenden als Fahrschemel bezeichnet wird und zwei im wesentlichen L-förmige Längsträger 18, 20 umfaßt. Die beiden Längsträger 18, 20 weisen jeweils einen ersten, im wesentlichen horizontal ausgerichteten Schenkel 22 bzw. 24 auf sowie einen zweiten, kürzeren und schräg zur Horizontalen nach oben ausgerichteten Schenkel 23 bzw. 25. In ihrem gekrümmten Bereich 26 sind die beiden Längsträger 18, 20 über einen quer zur Fahrtrichtung 30 ausgerichteten unteren Querträger 32 starr miteinander verbunden.

Der Fahrschemel 16 weist außerdem einen parallel zum unteren Querträger 32 ausgerichteten oberen Querträger 34 auf, der die freien Enden der zweiten Schenkel 23, 25 der Längsträger 18 und 20 starr miteinander verbindet und über die Längsträger 18 bzw. 20 seitlich überstehende freie Endbereiche aufweist, die jeweils eine Lagerfläche 36 bzw. 38 ausbilden und ein erstes Lagerelement in Form einer hinteren Luftfeder 40 bzw. 42 aufnehmen.

Der obere Querträger 34 ist einstückig mit einem entgegen der Fahrtrichtung 30 vom oberen Querträger 34 abstehenden Ausleger 44 verbunden, an dem ein Querlenker 46 angelenkt ist. Derartige Querlenker sind dem Fachmann bekannt, sie werden auch als Panhard-Stäbe bezeichnet. Über den Querlenker 46 kann der obere Querträger 34 des Fahrschemels 16 mit dem in der Zeichnung nicht dargestellten Fahrzeugaufbau verbunden werden.

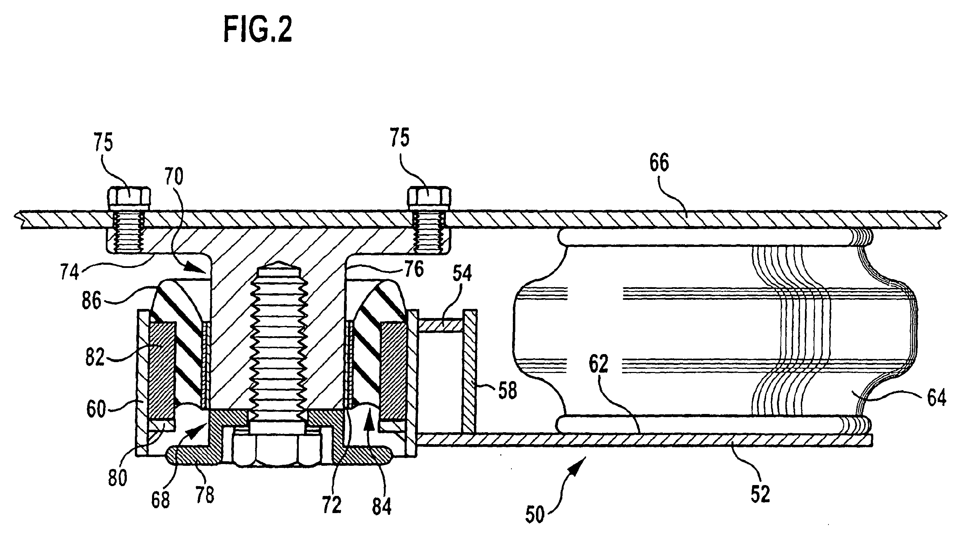

Die freien Enden der horizontal ausgerichteten ersten Schenkel 22 und 24 der beiden Längsträger 18 bzw. 20 sind über ein Querjoch 48 starr miteinander verbunden, das quer zur Fahrtrichtung 30 mittig ein in Figur 2 in Schnittansicht dargestelltes zweites Lagerelement 50 trägt. Das Querjoch 48 ist als Hohlprofil ausgestaltet und weist eine Bodenplatte 52 sowie eine parallel zu dieser ausgerichtete Deckplatte 54 auf, die über zwei Stirnwandabschnitte 56 und 57 sowie eine Rückwand 58 miteinander verbunden sind. Zur Aufnahme des zweiten Lagerelements 50 weisen die Bodenplatte 52 und die Deckplatte 54 quer zur Fahrtrichtung 30 mittig zum einen eine frontseitige, halbkreisförmige Aussparung auf, die zwischen den Stirnwandabschnitten 56 und 57 eine Lagerhülse 60 teilweise aufnimmt, wobei die Lagerhülse 60 mit dem Querjoch 48 verschweißt ist. Zum anderen weist die Deckplatte 54 eine quer zur Fahrtrichtung 30 mittig angeordnete halbkreisförmige rückwärtige Aussparung auf, über die die Bodenplatte 52 entgegen der Fahrtrichtung 30 übersteht, so daß die Bodenplatte 52 im Bereich der rückwärtigen Aussparung der Deckplatte 54 eine Lagerfläche 62 ausbildet.

Die Lagerfläche 62 nimmt ein Federglied des zweiten Lagerelements 50 in Form einer vorderen Luftfeder 64 auf. Über die vordere Luftfeder 64 sowie die hinteren Luftfedern 40 und 42 kann der in der Zeichnung nicht dargestellte Fahrzeugaufbau in vertikaler Richtung vom Fahrschemel 16 mittels einer 3-Punkt-Lagerung abgestützt werden. Hierzu können die drei Luftfedern 40, 42 und 64 zwischen dem Fahrschemel 16 und einem in Figur 2 ausschnittsweise dargestellten Fahrzeugboden 66 verspannt werden. Die Luftfedern 40, 42 und 64 nehmen hierbei jedoch nur vertikal ausgerichtete Kräfte auf.

Zur Übertragung horizontal ausgerichteter Kräfte zwischen dem Fahrzeugaufbau und dem Fahrschemel 16 weist das zweite Lagerelement 50 eine in Figur 2 dargestellte Führungsanordnung 68 auf mit miteinander zusammenwirkenden ersten und zweiten Führungselementen in Form eines Führungszapfens 70 und einer als Gleitbuchse 72 ausgebildeten Führungsbuchse, in der der Führungszapfen 70 in vertikaler Richtung verschieblich gelagert ist. Der Führungszapfen 70 umfaßt einen Verbindungsflansch 74, der mittels Schrauben 75 mit dem Fahrzeugboden 66 verschraubbar ist und von dem ein die Gleitbuchse 72 durchgreifender Führungsbolzen 76 absteht. An seinem freien Ende trägt der Führungszapfen 70 eine Abdeckung 78, die mit dem Führungszapfen 70 verschraubt ist.

Die Gleitbuchse ist innerhalb der Lagerhülse 60 positioniert. Diese trägt innenseitig einen metallischen Stützring 80, auf dem metallische Verstärkungselemente 82 eines ansonsten aus einem Elastomer gefertigten Lagerringes 84 aufsitzen, der den Zwischenraum zwischen der Gleitbuchse 72 und der Lagerhülse 60 ausfüllt. Der Lagerring 84 steht in Richtung auf den Fahrzeugboden 66 über die Gleitbuchse 72 über und bildet in diesem Bereich einen Puffer in Form eines den Führungszapfen 76 in radialem Abstand in Umfangsrichtung umgebenden Ringwulstes 86.

Der aus einem Elastomer gefertigte, metallische Verstärkungen aufweisende Lagerring 84 bildet ein federelastisches Halteelement zur Halterung der Führungsanordnung 68 in der Lagerhülse 60. Mittels der Führungsanordnung 68 können horizontal ausgerichtete Kräfte, wie sie insbesondere beim Beschleunigen und Abbremsen sowie bei einer Kurvenfahrt des Kraftfahrzeugs auftreten, zwischen dem Fahrschemel 16 und dem Fahrzeugboden 66 des Fahrzeugaufbaus übertragen werden.

Vertikal ausgerichtete Kräfte hingegen werden von der Führungsanordnung 68 nicht aufgenommen, die hierfür erforderliche Stützfunktion übernimmt die vordere Luftfeder 64.

Kommt es zu einer Fehlfunktion der vorderen Luftfeder 64, so kann sich der Verbindungsflansch 74 des Führungszapfens 70 am elastischen Ringwulst 86 abstützen, der somit eine Notfederung ermöglicht.

Ihren gekrümmten Bereichen 26 benachbart nehmen die ersten Schenkel 22 und 24 der Längsträger 18 bzw. 20 die angetriebene Hinterachse 12 auf, die mittels an sich bekannter, in der Zeichnung nur schematisch dargestellter U-förmiger Stahlbügel 88 mit den Längsträgern 18 und 20 verspannt ist.

Wie bereits erläutert, kann sich der Fahrschemel 16 in vertikaler Richtung gegenüber dem Fahrzeugaufbau bewegen. Die gesamte vertikale Abstützung wird von den drei Luftfedern 40, 42 und 64 übernommen. Alle horizontalen Kräfte werden vom Fahrschemel 16 über die Gleitbuchse 72 und den Führungszapfen 70 auf den Fahrzeugboden 66 des Fahrzeugaufbaus übertragen. Auf den Fahrschemel 16 einwirkende Seitenkräfte werden an zwei Stellen auf den Fahrzeugaufbau übertragen, nämlich am zweiten Lagerelement 50 vor der Hinterachse 12 und am Querlenker 46 (Panhard-Stab) hinter der Hinterachse 12. Da das zweite Lagerelement 50 und der Querlenker 46 auf unterschiedlicher Höhe angeordnet sind, ist die Wankachse des Kraftfahrzeugs nicht parallel zur Fahrbahn ausgerichtet. Dies hat eine deutlich erhöhte Wanksteifheit zur Folge. In Kombination mit einer zum Einsatz kommenden Vorderachse und mit gegebenenfalls zum Einsatz kommenden Nachlaufachsen bilden sich mehrere, zueinander gewinkelte Rollachsen des Kraftfahrzeugs, die nicht parallel zur Fahrbahn ausgerichtet sind, sondern im Winkel zueinander angeordnet sind. Dadurch kann eine beträchtlich erhöhte Fahrstabilität sichergestellt werden. Aufgrund der zum Einsatz kommenden Luftfeder 64 am vorderen Ende des Fahrschemels 16 werden beispielsweise aufgrund von Fahrbahnunebenheiten auftretende Stöße auf den Fahrzeugboden 66 zuverlässig verhindert, während gleichzeitig durch den Einsatz der Führungsanordnung 68 eine zuverlässige Führung in horizontaler Richtung sichergestellt ist.

Beim voranstehend beschriebenen Ausführungsbeispiel ist der Fahrschemel 16 derart in Fahrtrichtung 30 ausgerichtet, daß die ersten Lagerelemente 40, 42 bezogen auf die Fahrtrichtung 30 hinter der Hinterachse 12 und das zweite Lagerelement 50 vor der Hinterachse 12 positioniert sind. Alternativ könnte der Fahrschemel 16 bezogen auf die Fahrtrichtung 30 umgekehrt ausgerichtet sein, so daß die ersten Lagerelemente 40, 42 vor der Hinterachse 12 und das zweite Lagerelement 50 hinter der Hinterachse angeordnet sind. Auch bei einer derartigen Ausrichtung des Fahrschemels 16 ist durch die erfindungsgemäße Vorrichtung sichergestellt, daß eine Stoßbelastung des Fahrzeugaufbaus bei einer Wippbewegung des Fahrschemels 16 zuverlässig vermieden wird.

## Patentansprüche

1. Vorrichtung zur Anbindung einer Hinterachse an den Fahrzeugaufbau eines Kraftfahrzeuges, insbesondere eines Omnibusses, mit einem die Hinterachse tragenden starren Achsträger, der über zwei bezogen auf die Fahrtrichtung auf einer Seite der Hinterachse angeordnete erste Lagerelemente und ein quer zur Fahrtrichtung mittig auf der anderen Seite der Hinterachse angeordnetes zweites Lagerelement mit dem Fahrzeugaufbau verbindbar ist, **dadurch gekennzeichnet, daß** das zweite Lagerelement (50) ein Federglied (64) sowie eine Führungsanordnung (68) aufweist, die jeweils mit dem Fahrzeugaufbau (66) zusammenwirken, wobei das Federglied (64) in vertikaler Richtung ausgerichtete Kräfte zwischen dem Achsträger (16) und dem Fahrzeugaufbau (66) abfedert und wobei mittels der Führungsanordnung (68) in horizontaler Richtung ausgerichtete Kräfte zwischen dem Achsträger (16) und dem Fahrzeugaufbau (66) übertragbar sind.

2. Vorrichtung nach Anspruch 1, **dadurch gekennzeichnet, daß** die Führungsanordnung (68) miteinander zusammenwirkende erste und zweite Führungselemente (70, 72) umfaßt, die mit dem Fahrzeugaufbau (66) bzw. dem Achsträger (16) starr verbindbar und in vertikaler Richtung relativ zueinander verschiebbar sind, wobei über die Führungselemente (70, 72) horizontal ausgerichtete Kräfte zwischen dem Achsträger (16) und dem Fahrzeugaufbau (66) übertragbar sind.

3. Vorrichtung nach Anspruch 1 oder 2, **dadurch gekennzeichnet, daß** das Federglied als Luftfeder (64) ausgestaltet ist.

4. Vorrichtung nach einem der voranstehenden Ansprüche, **dadurch gekennzeichnet, daß** die beiden ersten Lagerelemente jeweils als Luftfedern (40, 42) ausgestaltet sind.

5. Vorrichtung nach einem der voranstehenden Ansprüche, **dadurch gekennzeichnet, daß** die Führungsanordnung (68) einen Führungszapfen (70) aufweist, der in vertikaler Richtung verschiebbar in einer Führungsbuchse (72) gelagert ist.

6. Vorrichtung nach Anspruch 5, **dadurch gekennzeichnet, daß** der Führungszapfen (70) mit dem Fahrzeugaufbau (66) starr verbindbar ist.

7. Vorrichtung nach Anspruch 5 oder 6, **dadurch gekennzeichnet, daß** das zweite Lagerelement (50) eine starr mit dem Achsträger (16) verbundene Lagerhülse (60) aufweist, in der die Führungsbuchse (72) federnd gelagert ist.

8. Vorrichtung nach Anspruch 7, **dadurch gekennzeichnet, daß** die Lagerhülse (60) die Führungsbuchse (72) in Umfangsrichtung umgibt, wobei zwischen der Führungsbuchse (72) und der Lagerhülse (60) ein federnder Lagerring (84) angeordnet ist.

9. Vorrichtung nach Anspruch 8, **dadurch gekennzeichnet, daß** der Lagerring (84) unter Einsatz eines Elastomers hergestellt ist.

10. Vorrichtung nach einem der Ansprüche 2 bis 9, **dadurch gekennzeichnet, daß** in vertikaler Richtung zwischen dem ersten und dem zweiten Führungselement (70, 72) der Führungsanordnung (68) ein Puffer (86) angeordnet ist, der einen Mindestabstand zwischen den beiden Führungselementen (70, 72) sicherstellt.

11. Vorrichtung nach Anspruch 10, **dadurch gekennzeichnet, daß** der Puffer als an dem dem Fahrzeugaufbau (66) zugewandten Ende der Führungsbuchse (72) angeordnetes, in Richtung auf den Fahrzeugaufbau (66) über die Führungsbuchse (72) überstehendes Auflageelement (86) ausgebildet ist.

12. Vorrichtung nach Anspruch 10 oder 11, **dadurch gekennzeichnet, daß** der Puffer als einstückig mit dem Lagerring (84) verbundener Ringwulst (86) ausgestaltet ist, der den Führungszapfen (70) in radialem Abstand in Umfangsrichtung umgibt.

13. Vorrichtung nach einem der voranstehenden Ansprüche, **dadurch gekennzeichnet, daß** der Achsträger (16) zwei Längsträger (18, 20) aufweist, die jeweils L-förmig ausgestaltet sind und einen ersten, im wesentlichen horizontal ausgerichteten Schenkel (22, 24) sowie einen zweiten, im wesentlichen schräg oder senkrecht zur Horizontalen ausgerichteten Schenkel (23, 25) aufweisen, wobei die ersten Lagerelemente (40, 42) den freien Enden der zweiten Schenkel (23, 25) benachbart angeordnet sind und wobei das zweite Lagerelement (50) den freien Enden der ersten Schenkel (22, 24) benachbart angeordnet ist.

14. Vorrichtung nach Anspruch 13, **dadurch gekennzeichnet, daß** die ersten Lagerelemente (40, 42) an einem die freien Enden der zweiten Schenkel (23, 25) der Längsträger (18, 20) starr miteinander verbindenden oberen Querträger (34) angeordnet sind.

15. Vorrichtung nach Anspruch 14, **dadurch gekennzeichnet, daß** am oberen Querträger (34) ein Querlenker (46) angelenkt ist zur Verbindung des oberen Querträgers (34) mit dem Fahrzeugaufbau.

16. Vorrichtung nach Anspruch 13, 14 oder 15, **dadurch gekennzeichnet, daß** die beiden Längsträger (18, 20) V-förmig zueinander ausgerichtet und mit den freien Enden ihrer ersten Schenkel (22, 24) über das zweite Lagerelement (50) starr miteinander verbunden sind.

17. Vorrichtung nach einem der Ansprüche 13, 14 oder 14, **dadurch gekennzeichnet, daß** die freien Enden der ersten Schenkel (22, 24) der beiden Längsträger (18, 20) über ein Querjoch (48) starr miteinander verbunden sind, wobei das zweite Lagerelement (50) am Querjoch (48) angeordnet ist.

18. Vorrichtung nach Anspruch 17, **dadurch gekennzeichnet, daß** die beiden Längsträger (18, 20) im wesentlichen parallel zueinander ausgerichtet sind.

## Claims

1. Device for attaching a rear axle to the vehicle superstructure of a motor vehicle, particularly a bus/coach, with a rigid axle carrier which carries the rear axle and can be linked to the vehicle superstructure via two first bearing elements which in respect of the driving direction are arranged on one side of the rear axle and a second bearing element which in respect of the driving direction is arranged in transverse direction in centre position on the other side of the rear axle, **characterised in that** the second bearing element (50) has a spring unit (64) and a guide device (68) which interact with the vehicle superstructure (66), whereby the spring unit (64) absorbs forces acting in vertical direction between the axle carrier (16) and the vehicle superstructure (66) and whereby forces acting in horizontal direction between the axle carrier (16) and the vehicle superstructure (66) can be transmitted by means of the guide device (68).

2. Device according to Claim 1, **characterised in that** the guide device (68) comprises interacting first and second guide elements (70, 72) which can be rigidly connected with the vehicle superstructure (66) and the axle carrier (16) and can be shifted relative to one another in vertical direction, whereby horizontally acting forces between the axle carrier (16) and the vehicle superstructure (66) can be transmitted via the guide elements (70, 72).

3. Device according to Claim 1 or 2, **characterised in that** the spring unit is provided in the form of an air spring (64).

4. Device according to one of the foregoing Claims, **characterised in that** the two first bearing elements are designed as air springs (40, 42).

5. Device according to one of the foregoing Claims, **characterised in that** the guide device (68) has a guide pin (70) which can be shifted in vertical direction in a guide bush (72).

6. Device according to Claim 5, **characterised in that** the guide pin (70) can be rigidly connected with the vehicle superstructure (66).

7. Device according to Claim 5 or 6, **characterised in that** the second bearing element (50) has a bearing sleeve (60) which is rigidly connected with the axle carrier (16) and in which the guide bush (72) is supported in a spring-type manner.

8. Device according to Claim 7, **characterised in that** the bearing sleeve (60) encompasses the guide bush (72) in circumferential direction, whereby a spring-type bearing ring (84) is arranged between the guide bush (72) and the bearing sleeve (60).

9. Device according to Claim 8, **characterised in that** the bearing ring (84) is made with the use of elastomer.

10. Device according to one of the Claims 2 to 9, **characterised in that** a buffer (86) is arranged between the first and second guide elements (70, 72) of the guide device (68), ensuring a minimum distance between the two guide elements (70, 72).

11. Device according to Claim 10, **characterised in that** the buffer is designed as a support element (86) arranged on that end of the guide bush (72) which faces the vehicle superstructure (66) and projecting beyond said guide bush (72) in the direction of the vehicle superstructure (66).

12. Device according to Claim 10 or 11, **characterised in that** the buffer is designed as a ring-type bead (86) which is connected as one piece with the bearing ring (84) and encompasses the guide pin (70) at radial distance in circumferential direction.

13. Device according to one of the foregoing Claims, **characterised in that** the axle carrier (16) has two L-shaped longitudinal members (18, 20) with a first basically horizontally arranged leg (22, 24) and a second leg (23, 25) arranged basically obliquely or perpendicularly to the horizontal plane, whereby the first bearing elements (40, 42) are adjacent to the free ends of the second legs (23, 25) and whereby the second bearing element (50) is adjacent to the free ends of the first legs (22, 24).

14. Device according to Claim 13, **characterised in that** the first bearing elements (40, 42) are arranged on an upper transverse member (34) rigidly interconnecting the free ends of the second legs (23, 25) of the longitudinal members (18, 20).

15. Device according to Claim 14, **characterised in that** a transverse control arm (46) is located on the upper transverse member (34) to link the upper transverse member (34) with the vehicle superstructure.

16. Device according to Claim 13, 14 or 15, **characterised in that** the two longitudinal members (18, 20) are in V-type alignment relative to each other and rigidly interconnected with the free ends of their first legs (22, 24) via the second bearing element (50).

17. Device according to one of the Claims 13, 14 or 15, **characterised in that** the free ends of the first legs (22, 24) of the two longitudinal members (18, 20) are rigidly interconnected via a transverse yoke (48), whereby the second bearing element (50) is arranged at the transverse yoke (48).

18. Device according to Claim 17, **characterised in that** the two longitudinal members (18, 20) are arranged basically parallel to each other.

## Revendications

1. Dispositif de liaison d'un pont arrière à la carrosserie d'un véhicule à moteur, en particulier d'un car de tourisme, avec un support d'essieu rigide portant le pont arrière et pouvant être relié à la carrosserie du véhicule par l'intermédiaire de deux premiers éléments de paliers disposés sur un côté du pont arrière, vus dans le sens de la marche, et d'un deuxième élément de palier disposé transversalement au sens de la marche, au centre, de l'autre côté du pont arrière, **caractérisé en ce que** le deuxième élément de palier (50) présente un élément de suspension (64) et un système de guidage (68) qui complètent l'action de la carrosserie (66), auquel cas l'élément de suspension (64) amortit les forces orientées verticalement entre le support d'essieu (16) et la carrosserie (66), et le système de guidage (68) transmet les forces orientées horizontalement entre le support d'essieu (16) et la carrosserie (66).

2. Dispositif selon la revendication 1, **caractérisé en ce que** le système de guidage (68) comprend un premier et un deuxième élément de guidage (70, 72) à action conjointe, pouvant être reliés de manière rigide à la carrosserie (66) ou au support d'essieu (16) et décalés verticalement l'un par rapport à l'autre, et permettant la transmission des forces orientées horizontalement entre le support d'essieu (16) et la carrosserie (66).

3. Dispositif selon la revendication 1 ou 2, **caractérisé en ce que** l'élément de suspension est un amortisseur pneumatique (64).

4. Dispositif selon l'une des revendications précédentes, **caractérisé en ce que** les deux premiers éléments de palier sont des amortisseurs pneumatiques (40, 42).

5. Dispositif selon l'une des revendications précédentes, **caractérisé en ce que** le système de guidage (68) présente un tenon de guidage (70) logé dans une douille de guidage (72) de manière mobile dans le sens vertical.

6. Dispositif selon la revendication 5, **caractérisé en ce que** le tenon de guidage (70) est relié de manière rigide à la carrosserie (66).

7. Dispositif selon la revendication 5 ou 6, **caractérisé en ce que** le deuxième élément de palier (50) présente un manchon (60) dans lequel la douille de guidage (72) est montée sur ressort.

8. Dispositif selon la revendication 7, **caractérisé en ce que** le manchon (60) enveloppe tangentiellement la douille de guidage (72), une bague de palier élastique (84) étant disposée entre la douille de guidage (72) et le manchon (60).

9. Dispositif selon la revendication 8, **caractérisé en ce que** la bague de palier (84) est fabriquée à partir d'un élastomère.

10. Dispositif selon l'une des revendications 2 à 9, **caractérisé en ce qu'**un butoir (86) est situé verticalement entre le premier et le deuxième élément de guidage (70, 72) du système de guidage (68) et garantit un écartement minimum entre les deux éléments de guidage (70, 72).

11. Dispositif selon la revendication 10, **caractérisé en ce que** le butoir est constitué d'un élément d'appui (86) situé à l'extrémité de la douille de guidage (72) orientée vers la carrosserie du véhicule (66) et dépassant de la douille de guidage (72) en direction de la carrosserie (66).

12. Dispositif selon la revendication 10 ou 11, **caractérisé en ce que** le butoir est constitué d'un tore (86) monobloc relié à la bague de palier (84) et entourant tangentiellement le tenon de guidage (70) sur la distance radiale.

13. Dispositif selon l'une des revendications précédentes, **caractérisé en ce que** le support d'essieu (16) présente deux longerons (18, 20) en forme de L et une première branche (22, 24) essentiellement horizontale ainsi qu'une deuxième branche (23, 25) essentiellement oblique ou verticale, les premiers éléments de palier (40, 42) étant disposés à côté des extrémités libres des deuxièmes branches (23, 25) et le deuxième élément de palier (50) étant situé à côté des extrémités libres des premières branches (22, 24).

14. Dispositif selon la revendication 13, **caractérisé en ce que** les premiers éléments de palier (40, 42) sont disposés sur une traverse supérieure (34) reliant entre elles les extrémités libres des deuxièmes branches (23, 25) des longerons (18, 20) de manière rigide.

15. Dispositif selon la revendication 14, **caractérisé en ce qu'**un bras transversal (46) est articulé sur la traverse supérieure (34) et relie la traverse supérieure (34) à la carrosserie.

16. Dispositif selon la revendication 13, 14 ou 15, **caractérisé en ce que** les deux longerons (18, 20) sont disposés en forme de V et reliés entre eux de manière rigide au niveau des extrémités libres de leurs premières branches (22, 24) par l'intermédiaire du deuxième élément de palier (50).

17. Dispositif selon l'une des revendications 13 ou 14, **caractérisé en ce que** les extrémités libres des premières branches (22, 24) des deux longerons (18, 20) sont reliées entre elles de manière rigide par une entretoise rigide (48), le deuxième élément de palier (50) étant disposé contre l'entretoise (48).

18. Dispositif selon la revendication 17, **caractérisé en ce que** les deux longerons (18, 20) sont disposés pour l'essentiel de manière parallèle l'un par rapport à l'autre.
